# EUROPEAN PATENT SPECIFICATION

(11) **EP 2 585 850 B1**
(45) Date of publication and mention of the grant of the patent: **02.08.2017**
(21) Application number: 11725104.1
(22) Date of filing: 16.06.2011
(51) Int. Cl.: G01S 13/90, H01Q 15/18

(54) **APPARATUS FOR MEASURING THE EARTH SURFACE MOVEMENT BY MEANS OF SAR IMAGES WITH AT LEAST ONE ELECTROMAGNETIC WAVE REFLECTOR**
VORRICHTUNG ZUR MESSUNG DER ERDOBERFLÄCHENBEWEGUNG ANHAND VON SAR-BILDERN MIT MINDESTENS EINEM ELEKTROMAGNETISCHEN WELLENREFLEKTOR
APPAREIL DE MESURE DU MOUVEMENT DE LA SURFACE DE LA TERRE AU MOYEN D'IMAGES DE RADAR À SYNTHÈSE D'OUVERTURE RSO AVEC AU MOINS UN RÉFLECTEUR D'ONDE ÉLECTROMAGNÉTIQUE

(30) Priority: 28.06.2010 IT MI20101167
(43) Date of publication of application: 01.05.2013
(73) Proprietor: TRE ALTAMIRA s.r.l., 20143 Milano (IT)
(72) Inventor: TAMBURINI, Andrea, I-20097 San Donato Milanese (IT); BIANCHI, Marco, I-20025 Legnano (IT)
(74) Representative: Mittler, Enrico
(86) International application number: PCT/EP2011/059991
(87) International publication number: WO 2012/000796

(56) References cited:
- JP-A- 2001 091 649
- US-A- 4 843 396
- ALESSANDRO FERRETTI ET AL: "Submillimeter Accuracy of InSAR Time Series: Experimental Validation", IEEE TRANSACTIONS ON GEOSCIENCE AND REMOTE SENSING, IEEE SERVICE CENTER, PISCATAWAY, NJ, US, vol. 45, no. 5, 1 May 2007 (2007-05-01), pages 1142-1153, XP011177290, ISSN: 0196-2892, DOI: DOI:10.1109/TGRS.2007.894440
- SCHUBERT A ET AL: "Influence of Atmospheric Path Delay on the Absolute Geolocation Accuracy of TerraSAR-X High-Resolution Products", IEEE TRANSACTIONS ON GEOSCIENCE AND REMOTE SENSING, IEEE SERVICE CENTER, PISCATAWAY, NJ, US, vol. 48, no. 2, 1 February 2010 (2010-02-01), pages 751-758, XP011298646, ISSN: 0196-2892
- SANDBERG G ET AL: "Measurements of Faraday Rotation Using Polarimetric PALSAR Images", IEEE GEOSCIENCE AND REMOTE SENSING LETTERS, IEEE SERVICE CENTER, NEW YORK, NY, US, vol. 6, no. 1, 1 January 2009 (2009-01-01) , pages 142-146, XP011241026, ISSN: 1545-598X, DOI: DOI:10.1109/LGRS.2008.2010062
- COTE S ET AL: "SAR image quality and calibration operations for the RADARSAT satellites at the Canadian Space Agency", RADAR CONFERENCE - SURVEILLANCE FOR A SAFER WORLD, 2009. RADAR. INTERNATIONAL, IEEE, PISCATAWAY, NJ, USA, 12 October 2009 (2009-10-12), pages 1-6, XP031653138, ISBN: 978-2-912328-55-7

## Description

The present invention relates to an apparatus for measuring the earth surface movement by means of SAR images with at least one electromagnetic wave reflector.

The present invention relates to a device for taking highly accurate measurements of movement based on SAR interferometry techniques. It is known that a synthetic aperture radar system (SAR) generally operates at a frequency between 400 Mhz and 10 Ghz, and is usually installed on aeroplanes or satellite platforms orbiting at an altitude between 250 - 800 km. The radar antenna is directed towards earth in orthogonal way with respect to the direction of motion of the platform (aeroplane or satellite) with a so-called "off-nadir" angle, between 20 - 80 degrees with respect to the Nadir direction, i.e. perpendicularly to the earth.

With such a system, images may be generated of the earth surface also with a spatial resolution lower than one metre, regardless of the cloud cover and of the presence of solar light. By conveniently combining several SAR images acquired at various instants over the same area of interest and generating some interferograms (as thoroughly documented in literature), in certain cases it is possible to take highly accurate measurements of earth surface movement, thus to be able to detect differential movements also of entity less than 1 mm/year (at, for example, seismic faults, areas with earth slides, subsidences, bradyseisms, etc.) due to the use of the phase information of the radar signal. The basic idea is in any event the one of comparing the sensor-target distance at various instants and emphasizing any movements. In particular among the measuring techniques based on SAR interferometry, the PSInSAR^{™} technique is mentioned as a clear example of industrial application.

A measuring system of the earth surface movements based on SAR satellite radar is effective when the features of the earth surface allow the radar pulses to be reflected while storing sufficient energy to ensure an adequate signal-noise ratio for the interferometric uses; in such a case, in addition to the amplitude values, phase data of the radar signal are used which are as a function of the sensor-target distance. The nature of the earth surface decisively affects the return signal; in certain cases, especially in vegetated areas without structures or rocks exposed, it may occur that such a signal, when interacting with the earth surface, undergoes an excessive reduction up to becoming unusable for the estimate of the movements.

To make up for the adverse physical features of the earth surface, artificial reflectors may be used, i.e. devices studied specifically for reflecting a sizeable portion of the signal transmitted towards the antenna of the source. The artificial reflectors generally correspond to metal objects (typically of shape similar to a trihedron) which are conveniently placed in the area being monitored and are made, by means of suitable bases, integral with the earth surface intended to be monitored.

These devices, which are similar to the so-called "optical sights" used for conventional geodetic surveys, should keep their "radar signature" stable over time, i.e. the radar reflectivity values associated therewith should be stable and reliable both with regards to amplitude values and with regards to phase values. In particular, for interferometric applications, the artificial reflectors should be sufficiently sturdy against atmospheric events to ensure, over time, that it is always possible to accurately measure - with interferometric SAR data - the phase centre thereof, which is in fact the point subject to monitoring.

The artificial reflectors form radar measuring points which are quite visible in the SAR images, indeed due to the high value of the Equivalent Radar Area (often noted in readings as Radar Cross Section or RCS) characterizing these devices, the signal-noise ratio is usually very high both with regards to the amplitude values and to the ones of phase of the backscattered signal and thus they allow an effective use thereof in the interferometric applications.

The technique of the artificial reflectors is known and documented in literature, however the artificial reflectors used to date in the measurements of movement by means of SAR radar are only effective for a specific geometry of acquisition. In particular, with regards to the SAR satellite data, today's artificial reflectors are designed to obtain good reflectivity values for orbits either exclusively of ascendant type (i.e. with the satellite which lights up the area of interest by following a motion from south towards north), or exclusively of descendant type (i.e. with the satellite in motion from north towards south).

Repeated acquisitions at various instants along a certain orbit, i.e. data acquired by using a specific geometry of acquisition, allow measuring the sole component of the movement vector which is parallel to the earth sensor-target connecting line. Indeed by comparing the distance values between the radar antenna and the measuring point, any movements in direction orthogonal to the line of sight may not be noted, since they do not give rise to any distance variation. The interferometric measurements are mono-component measurements (i.e. measurements with one dimension) and only the combination of two or more simultaneous measurements relating to the same measuring point and obtained from separate and complementary geometries of acquisition may allow the extraction of two or three components of the movement vector.

For this reason, should information be wanted in two dimensions relating to a specific area, for example, when it is important to obtain at least two components of the movement vector, the use of artificial reflectors to form reliable measuring points on unfavorable earth surfaces involves positioning at least two separate reflectors for each desired measuring point. Specifically, with regards to the satellite radar data available today, an effective artificial reflector will have to be positioned on the ascendant orbits of the sensor and an effective one, adjacent to the first, on the descendant orbits.

However, as close as they may be, two separate radar reflectors will have two different phase centres: the measuring point is not strictly the same for both the reflectors and it is extremely complex to ensure that the two phase centres are truly integral with each other. It is important noting that the interferometric measurements may also have sub-millimetric accuracies, hence the presence of two separate phase centres, which however are presumed to be integral; this may be anything but trivial, in particular if the possible *'in situ"* effects are considered which do not involve the two reflectors in the same way.

The document of Alessandro Ferretti et al "Submillimeter Accuracy of InSAR Time Series: Eperimental Validation", IEEE TRANSACTIONS ON GEOSCIENCE AND REMOTE SENSING, IEEE SERVICE CENTER, PISCATAWAY, NJ, US, vol. 45, no. 5, 1 May 2007, pages 1142-1153, XP011177290 discloses the results of measurements of the earth surface movements by means of InSAR data which are performed using two pairs of dihedral reflectors.

JP 2001091649 provides a ground control point device for SAR image geometrical correction which is constituted by passive reflectors installed inside a visual field of a SAR image pickup.

US 4843396 discloses a passive trihedral corner reflector which rotates the polarization of a reflected microwave beam by 90° and thereby permits a reflected radar beam to be more easily distinguished by the interrogating radar system from the random reflections from nearby objects.

It is the object of the present invention to provide an apparatus for measuring the earth surface movement by means of SAR images with an electromagnetic wave reflector which allows a single earth measuring point for SAR interferometric measurements to be formed, which is effective for two complementary geometries of acquisition (for example orbits of ascendant and descendant type), easy to position, resistant to the potentially harmful action of common natural events, such as precipitations (rain, snow, hail phenomena), winds and possible damages caused by the local fauna (for example deer and plantigrades), and also subject to monitoring also with GPS antennas.

In accordance with the present invention, said object is achieved by means of an apparatus for measuring earth surface movement by means of SAR images as defined in claim 1.

The features and advantages of the present invention will become apparent from the following detailed description of a practical embodiment thereof, shown by way of non-limiting example in the accompanying drawings, in which:
figure 1 shows an apparatus for measuring the earth surface movement by means of SAR images in accordance with the present invention;
figure 2 is a perspective view of the electromagnetic wave reflector for the measuring apparatus in figure 1;
figure 3 is a front view of the reflector in figure 2;
figure 4 is a top view of the reflector in figure 2;
figure 5 is a front view of the reflector in figure 2, with cover;
figure 6 is a top view of the reflector in figure 5;
figure 7 shows the reflectivity map from SAR image relating to a passage along an ascendant orbit;
figure 8 shows the reflectivity map from SAR image relating to a passage along a descendant orbit;
figures 9 and 10 show the historic series of ascendant and descendant reflectivity of one of the reflectors used in accordance with the present invention.

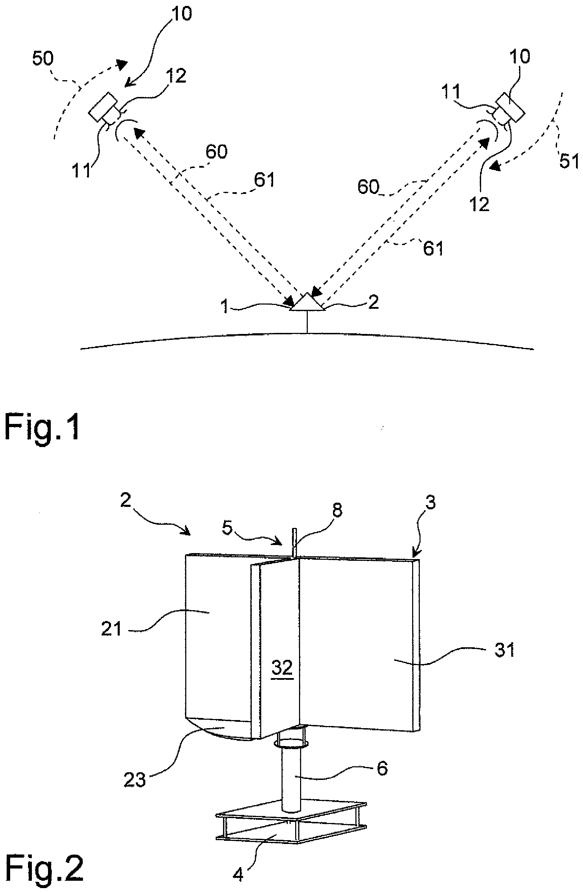

With reference to figure 1, a measuring apparatus of the earth surface movement by means of SAR images in accordance with the present invention is shown; said apparatus comprises a SAR radar 10, of satellite type or placed on an aeroplane, and adapted to acquire SAR images along ascendant 50 and descendant 51 orbits. The apparatus comprises at least one electromagnetic wave reflector 1 placed on an earth surface portion or interest area to be measured and configured for reflecting a sizeable portion of the signal transmitted towards the receiving antenna 12 of the SAR radar, both along ascendant orbits 50 and along descendant orbits 51 of the SAR radar 10. For such a reason, reflector 1 comprises a first trihedron 1 capable of reflecting signal 60 emitted by a transmitting antenna 11 of the SAR radar along ascendant orbits and a second trihedron 2 adapted to reflect signal 60 emitted by the SAR source along descendant orbits; the SAR radar 10 is capable of receiving the reflected signals 61 thus allowing a more accurate measurement of the earth surface movement by means of SAR images. Preferably transmitting antenna and receiving antenna consist of a single antenna.

Reflector 1 consists of a single phase centre for the SAR radar 10. Very accurate SAR images of the earth surface may be acquired with such an apparatus; by conveniently combining several SAR images acquired at various instants over the same interest area and generating some interferograms, it is possible to take highly accurate measurements of earth surface movement, thus being able to detect differential movements also of entity less than 1 mm/year (at, for example, seismic faults, areas with earth slides, subsidences, bradyseisms, etc.) due to the use of the phase information of the radar signal.

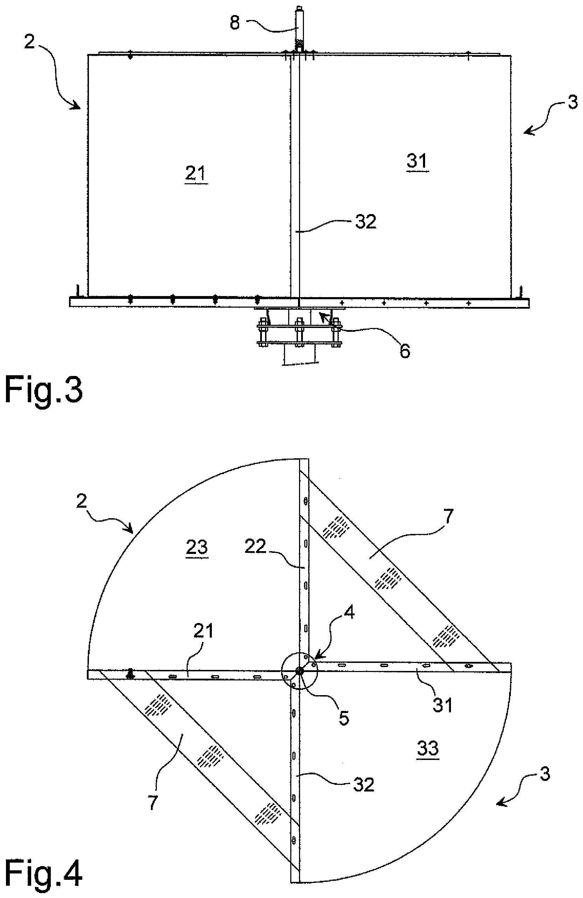

With reference to figures 2-6, a reflector 1 for electromagnetic waves of an apparatus for measuring SAR images in accordance with the present invention is shown. Reflector 1 of passive type comprises first 2 and second 3 trihedron having vertex 4 and edge 5 in common but no side surface or base in common. The first trihedron 2 comprises the side surfaces 21, 22 and base 23 and the second trihedron 3 comprises the side surfaces 31, 32 and base 33 (figures 2-4). The side surfaces 21, 22 and 31, 32 have edge 5 in common and are placed so as to be orthogonal to each other and to base 23, 33 of the trihedras 2 and 3; the bases 23 and 33 only have vertex 4 in common. Moreover the adjacent side surfaces 21, 32 and 22, 31 of first 2 and second trihedron are orthogonal to each other.

Preferably, reflector 1 is placed at a certain height from the earth surface by means of a support 6; said support 6 allows the orientation of the trihedras 2 and 3, thus orienting the bases 23 and 33.

Preferably, reflector 1 may also comprise a GPS antenna 8 placed on the top of the reflector to identify the reflector.

The side surfaces 21-22, 31-32 and the bases 23 and 33 are made with metal material and may also preferably consist of meshes or pierced material. The side mesh surfaces are normally used to select the frequencies at which the trihedras resonate, thus being transparent to the other frequencies. Moreover, the direction of the holes may be selective of the type of polarisation of the incident electromagnetic wave; this allows, for example, a reflector to be made visible to the radars which emit pulses with vertical rather than horizontal polarisations and vice versa.

Preferably, both the side surfaces 21, 22 and 31, 32 of the trihedras 2 and 3, the bases 23 and 33 and support 6 are made with un-assemblable and re-assemblable parts; preferably the side surfaces 21 and 31 belong to a single plate and the side surfaces 22 and 32 belong to another single plate. Moreover, the plates may be of type having a mesh, which decreases the weight thereof and facilitates the transport thereof.

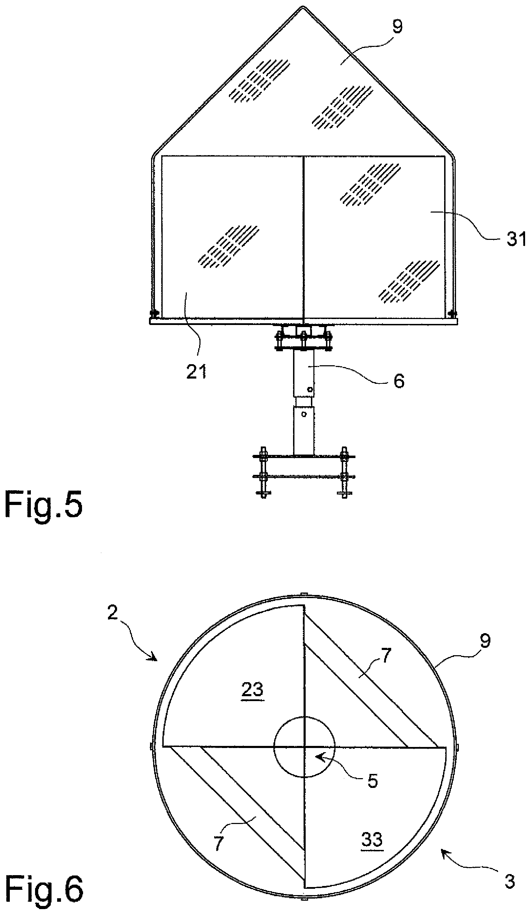

Preferably, reflector 1 comprises a cover 9 made with material transparent to the electromagnetic waves, capable of entirely covering both the trihedras 2 and 3 and any GPS antenna 8 to prevent the accumulation of any type of material inside thereof (figures 5 and 6).

Preferably, some support bars 7 are placed between the side surfaces 21, 31 and 22, 32 of the trihedras 2 and 3. The sizes of the passive reflector determine the Equivalent Radar Area, whose useful value essentially depends on the sight angle between the antenna of the SAR device 10 and reflector 1, on the wave length used by the SAR radar and on the type of earth surface on which reflector 1 is positioned. Typically, normal sizes of the side of the surfaces of the trihedras for the SAR radars currently available for interferometric applications, are to be considered between 50 - 100 cm.

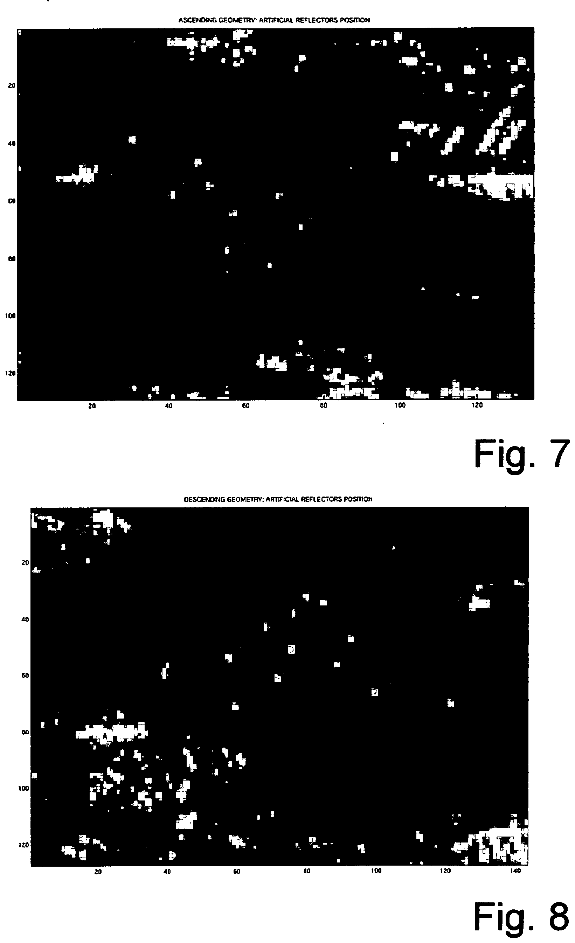

Figure 7 shows the reflectivity map from SAR image of a test area; the image relates to a passage along an ascendant orbit, in which 7 very bright pixels are noted corresponding to seven double trihedron reflectors AR1...AR7 in accordance with the invention; in figure 8, the same seven reflectors AR1...AR7 are visible on an image of the same area obtained from the same radar sensor, but along a descendant orbit. Said reflectivity maps have been obtained by using SAR data from the satellite RADARSAT 1, acquired both in ascendant and descendant orbits by positioning seven double trihedron reflectors AR1...AR7 in accordance with the invention, in an area with low reflectivity.

The sensor detected the same area several times, both along ascendant orbit and along descendant orbit, all acquisitions at a distance of 24 days from the preceding one; during both the first ascendant and descendant acquisition, the area did not have reflectors, instead in the successive ones, reflectors were present which were never moved: thereby chronological reflectivity series were formed, which demonstrate how the brightness increased significantly of the pixel corresponding to the area in which the reflector was positioned, after the reflectors were placed.

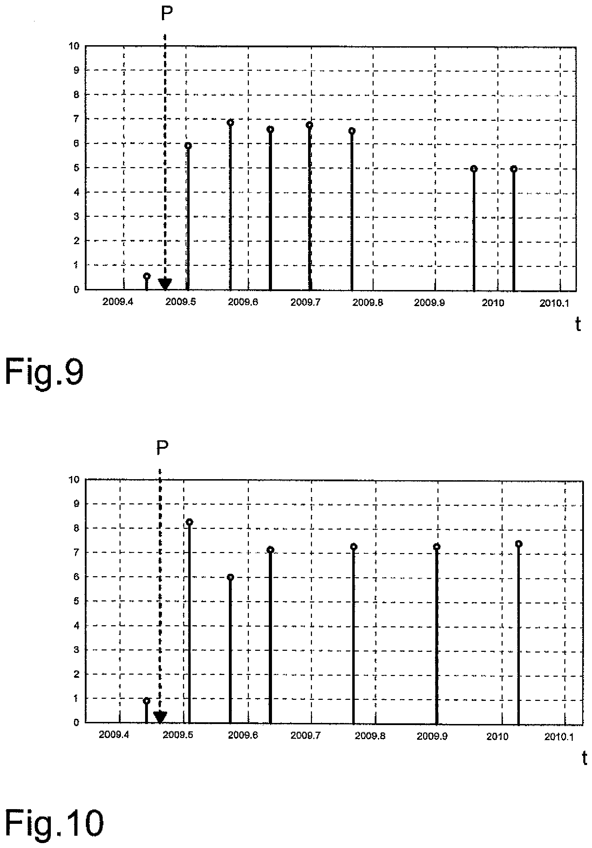

Figures 9 and 10 show the historic ascendant and descendant reflectivity series of one of the seven reflectors used AR1...AR7 (AR2 in the reflectivity maps in figures 7 and 8); the increased brightness is apparent successive to the laying of reflector AR2 on the area of use, at the instant noted with letter P. The increased brightness implies a significant improvement of the signal-noise ratio, such as to make interferometric measurements possible.

With respect to the state of the art, in addition to the significant advantage of the double reflective geometry with a single phase centre, the present invention allows the installation costs to be decreased with respect to the use of two traditional reflectors (one for ascendant orbit and one for descendant orbit), decreased volumes to be involved with respect to the use of two traditional reflectors with the same Equivalent Radar Area, GPS antennas to be easily housed which the experiments have shown not to interfere with the device itself, increasing sturdiness to reflectivity variations to be achieved due to the cover made with material which is transparent to the electromagnetic waves which prevents the deposit of external elements inside the trihedras which may drastically decrease the reflective ability of the electromagnetic waves (for example, the accumulation of leaves, sand, etc., etc.).

## Claims

1. Apparatus for measuring the earth surface movement by means of SAR images, said apparatus comprising at least a SAR radar (10) placed on a satellite or an aeroplane and at least one electromagnetic wave reflector (1) placed on a earth surface portion to be measured, said at least one SAR radar comprising means (11) for transmitting an electromagnetic signal (60) onto said reflector and means (12) for acquiring the electromagnetic signal (61) reflected from the reflector, said SAR radar being adapted to acquire reflected signals along ascendant (50) and descendant (51) orbits, said reflector comprising in a single piece a first trihedron (2) configured for reflecting the signal transmitted by the SAR radar along ascendant orbits (50) and a second trihedron (3) configured for reflecting the signal transmitted by the SAR radar along descendant orbits (51), each one of said first trihedron (2) and said second trihedron (3) comprising two side surfaces (21, 22, 31, 32) and a base (23, 33), said side surfaces (21, 22, 31, 32) being orthogonal to each other and to the base (23, 33), **characterized in that** said first trihedron (2) and said second trihedron (3) have an edge (5) and a vertex in common but no side surface or base in common.

2. Apparatus according to claim 1, **characterized in that** the side surfaces (21, 22, 31, 32) and the bases (23, 33) of first trihedron (2) and the second trihedron (3) are performed by means of pierced metal material.

3. Apparatus according to claim 1, **characterized by** comprising a support (6) adapted to allow the orientation of the first trihedron (2) and the second trihedron (3) by means of the orientation of the bases (23, 33).

4. Apparatus according to claim 3, **characterized in that** the side surfaces (21, 22, 31, 32) and the bases (23, 33) of first trihedron (2) and the second trihedron (3) and the support (6) are performed in un-assemblable and re-assemblable parts.

5. Apparatus according to claim 1, **characterized by** comprising a GPS antenna (8) arranged on the top of the reflector.

6. Apparatus according to claim 1, **characterized by** comprising a cover (9) performed with a material transparent to the electromagnetic waves and able to cover both the first trihedron (2) and the second trihedron (3).

## Patentansprüche

1. Vorrichtung zum Vermessen der Erdoberflächenbewegung mittels SAR-Aufnahmen, wobei die Vorrichtung zumindest ein auf einem Satelliten oder einem Flugzeug angeordnetes SAR-Radar (10) und zumindest einen auf einem zu vermessenden Erdoberflächenabschnitt angeordneten elektromagnetischen Wellenreflektor (1) aufweist, wobei das zumindest eine SAR-Radar Mittel (11) zum Übertragen eines elektromagnetischen Signals (60) auf den Reflektor und Mittel (12) zum Aufnehmen des von dem Reflektor reflektierten elektromagnetischen Signals (61) aufweist, wobei das SAR-Radar zum Aufnehmen von reflektierten Signalen entlang aszendenter (50) und deszendenter (51) Orbits ausgebildet ist, wobei der Reflektor in einem Stück einen ersten Trieder (2), der zum Reflektieren des von dem SAR-Radar entlang aszendenter Orbits (50) übertragenen Signals ausgebildet ist, und einen zweiten Trieder (3), der zum Reflektieren des von dem SAR-Radar entlang deszendenter Orbits (51) übertragenen Signals ausgebildetist, aufweist, wobei der erste Trieder (2) und der zweite Trieder (3) jeweils zwei Seitenflächen (21, 22, 31, 32) und eine Basis (23, 33) aufweisen, wobei die Seitenflächen (21, 22, 31, 32) orthogonal zueinander und zu der Basis (23, 33) sind, **dadurch gekennzeichnet, dass** der erste Trieder (2) und der zweite Trieder (3) eine Kante (5) und eine Ecke gemeinsam, aber keine Seitenfläche oder Basis gemeinsam haben.

2. Vorrichtung gemäß Anspruch 1, **dadurch gekennzeichnet, dass** die Seitenflächen (21, 22, 31, 32) und die Basen (23, 33) des ersten Trieders (2) und des zweiten Trieders (3) mittels gelochtem Metallmaterial ausgeführt sind.

3. Vorrichtung gemäß Anspruch 1, **gekennzeichnet durch** das Aufweisen eines Trägers (6), der zum Ermöglichen der Ausrichtung des ersten Trieders (2) und des zweiten Trieders (3) durch Ausrichten der Basen (23, 33) ausgebildet ist.

4. Vorrichtung gemäß Anspruch 3, **dadurch gekennzeichnet, dass** die Seitenflächen (21, 22, 31, 32) und die Basen (23, 33) des ersten Trieders (2) und des zweiten Trieders (3) und der Träger (6) aus nicht-zusammensetzbaren und wiederzusammensetzbaren Teilen ausgeführt sind.

5. Vorrichtung gemäß Anspruch 1, **gekennzeichnet durch** das Aufweisen einer oben auf dem Reflektor angeordneten GPS-Antenne (8).

6. Vorrichtung gemäß Anspruch 1, **gekennzeichnet durch** das Aufweisen einer Abdeckung (9), die mit einem für die elektromagnetischen Wellen transparenten Material ausgeführt ist und sowohl den ersten Trieder (2) als auch den zweiten Trieder (3) abdecken kann.

## Revendications

1. Dispositif pour mesurer le mouvement de la surface de la terre au moyen d'images RSO, ledit dispositif comprenant au moins un radar RSO (10) placé sur un satellite ou un aéroplane et au moins un réflecteur d'ondes électromagnétiques (1) placé sur une partie de surface terrestre à mesurer, ledit au moins un radar RSO comprenant des moyens (11) pour émettre un signal électromagnétique (60) sur ledit réflecteur et des moyens (12) pour acquérir le signal électromagnétique (61) réfléchi depuis le réflecteur, ledit radar RSO étant adapté pour acquérir des signaux réfléchis le long d'orbites ascendantes (50) et descendantes (51), ledit réflecteur comprenant en une seule pièce un premier trièdre (2) configuré pour réfléchir le signal émis par le radar RSO le long d'orbites ascendantes (50) et un second trièdre (3) configuré pour réfléchir le signal émis par le radar RSO le long d'orbites descendantes (51), chacun desdits premier trièdre (2) et second trièdre (3) comprenant deux surfaces latérales (21, 22, 31, 32) et une base (23, 33), lesdites surfaces latérales (21, 22, 31, 32) étant orthogonales l'une à l'autre et à la base (23, 33), **caractérisé en ce que** ledit premier trièdre (2) et ledit second trièdre (3) ont un bord (5) et un sommet en commun mais aucune surface latérale ou base en commun.

2. Dispositif selon la revendication 1, **caractérisé en ce que** les surfaces latérales (21, 22, 31, 32) et les bases (23, 33) du premier trièdre (2) et du second trièdre (3) sont réalisées au moyen d'un matériau métallique percé.

3. Dispositif selon la revendication 1, **caractérisé en ce qu'**il comprend un support (6) adapté pour permettre l'orientation du premier trièdre (2) et du second trièdre (3) au moyen de l'orientation des bases (23, 33).

4. Dispositif selon la revendication 3, **caractérisé en ce que** les surfaces latérales (21, 22, 31, 32) et les bases (23, 33) du premier trièdre (2) et du second trièdre (3) et le support (6) sont réalisés en parties non assemblables et ré-assemblables.

5. Dispositif selon la revendication 1, **caractérisé en ce qu'**il comprend une antenne GPS (8) agencée sur le haut du réflecteur.

6. Dispositif selon la revendication 1, **caractérisé en ce qu'**il comprend un couvercle (9) réalisé avec un matériau transparent aux ondes électromagnétiques et permettant de couvrir à la fois le premier trièdre (2) et le second trièdre (3).
